# EUROPEAN PATENT SPECIFICATION

(11) **EP 2 358 812 B1**
(45) Date of publication and mention of the grant of the patent: **02.05.2018**
(21) Application number: 09792505.1
(22) Date of filing: 14.09.2009
(51) Int. Cl.: C08L 31/04, C08L 33/06, C08K 3/32, C08K 5/053, C08K 5/3492, C08J 5/18, B32B 27/30, B41M 5/52

(54) **PRINTABLE FLAME RETARDANT POLYMERIC FILM**
BEDRUCKBARE FLAMMWIDRIGE POLYMERFOLIE
FILM POLYMÈRE IGNIFUGE IMPRIMABLE

(30) Priority: 26.11.2008 WO PCT/US2008/084812
(43) Date of publication of application: 24.08.2011
(73) Proprietor: Avery Dennison Corporation, Pasadena, CA 91103-3596 (US)
(72) Inventor: SHIH, Frank, Y., Arcadia CA 91007 (US); CHU, Chia-Hsi, Arcadia CA 91006 (US); MALLYA, Prakash, S., Sierra Madre CA 91024 (US); BEVAN, Greg, Alta Loma CA 91701 (US)
(74) Representative: Müller-Boré & Partner Patentanwälte PartG mbB
(86) International application number: PCT/US2009/056808
(87) International publication number: WO 2010/062438

(56) References cited:
- WO-A-01/05886
- US-A1- 2001 027 226
- DATABASE CA [Online] CHEMICAL ABSTRACTS SERVICE, COLUMBUS, OHIO, US; XP002561162 retrieved from STN Database accession no. 139:181482 -& JP 2003 227079 A (HIRAOKA AND CO., LTD., JAPAN) 15 August 2003 (2003-08-15)
- DATABASE WPI Week 200549 Thomson Scientific, London, GB; AN 2005-481474 XP002561164 & JP 2005 161742 A (KYOWA KK) 23 June 2005 (2005-06-23)
- DATABASE WPI Week 200160 Thomson Scientific, London, GB; AN 2001-538815 XP002561165 & JP 2001 130128 A (HIRAOKA SHOKUSEN KK) 15 May 2001 (2001-05-15)
- DATABASE WPI Week 200245 Thomson Scientific, London, GB; AN 2002-419568 XP002561166 & JP 2001 353827 A (HIRAOKA SHOKUSEN KK) 25 December 2001 (2001-12-25)
- DATABASE CA [Online] CHEMICAL ABSTRACTS SERVICE, COLUMBUS, OHIO, US; XP002561163 retrieved from STN Database accession no. 145:315758 & CN 1 702 115 A (BEIJING ZHONGWEI BANGHUA TECHNOLOGY DEVELOPMENT CO., LTD., PEOP. REP.) 30 November 2005 (2005-11-30)
- DATABASE WPI Week 197349 Thomson Scientific, London, GB; AN 1973-74709U XP002561167 & JP 48 056291 A (NISSAN CHEM IND LTD) 7 August 1973 (1973-08-07)
- DATABASE WPI Week 200428 Thomson Scientific, London, GB; AN 2004-297468 XP002561168 & JP 2003 238902 A (KOWA KAGAKU KOGYO KK) 27 August 2003 (2003-08-27)
- DATABASE WPI Week 200326 Thomson Scientific, London, GB; AN 2003-257609 XP002561169 & CN 1 183 445 A (ZHAO X) 3 June 1998 (1998-06-03)

## Description

### Field of the Invention

The present invention relates to adhesive and non-adhesive articles and methods of making the same. More particularly, the articles, or films, described herein are fire retardant and do not contain polyvinyl chloride ("PVC") or halogen elements. Halogen elements refer to a series of nonmetal elements from Group 17 IUPAC Style (formerly: VII, VIIA) of the periodic table, comprising fluorine, (F); chlorine, (Cl); bromine, (Br) and iodine (I). The articles can be used in a variety of applications which require printability, flame retardancy, and embossability, including for example, wall covering, signs, graphics, pressure sensitive products, and the like.

### Background of the Invention

Polyvinyl Chloride (PVC) films are widely used in such applications as wallcoverings, graphic decoration and etc. due to their cost advantage and superior properties in durability, printability and inherent fire-safety. However, the environmental concerns over the use of PVC material, e.g. releasing of toxic dioxins upon burning and water pollution from its phthalates plasticizer, have largely driven the development of PVC-alternative films. A PVC replacement film with integrated flame retardancy would be essential for applications such as wallcoverings. Flame retardants are materials that inhibit or resist the spread of fire. The common non-PVC polymeric materials do not readily have properties like PVC, especially in printability and flame retardancy. In this application, fire retardants and flame retardants are used interchangeably. Fire retardancy and flame retardancy are used interchangeably.

JP-A-2003-227079 discloses a double-faced sheet for drawing which consists of a substrate cloth consisting of a thermoplastic resin fibrous cloth, a thermoplastic resin-coated film layer formed on both surface and reverse sides of it and optionally a layer of a thermoplastic resin coating film between both of them.

Accordingly, there is a need for environmentally friendly, flame retardant, non-PVC films that have properties that are comparable with PVC films. The present invention satisfies this need.

### Summary of the Invention

The present invention relates to a film comprising a release liner, a pressure sensitive adhesive layer, a substrate layer, and a print layer, wherein the print layer includesa. an emulsion polymer being a blend of a vinyl acetate homopolymer and a vinyl acetate ethylene copolymer mixed withb. at least one nonhalogen fire retardant.

### Brief Description of the Drawings

These, as well as other features, aspects, and advantages of this invention, will be more completely understood and appreciated by referring to the following more detailed description of the presently preferred exemplary embodiments of the invention in conjunction with the accompanying drawings, of which:
Figure 1 is a sectional view of a film prepared in accordance with an exemplary embodiment of the present invention.
Figure 2 is a flow diagram of a method of making a film in accordance with the present invention.

Unless otherwise indicated, the illustrations in the above figures are not necessarily drawn to scale.

### Detailed Description of the Invention

The present invention is now illustrated in greater detail by way of the following detailed description that represents the best presently known mode of carrying out the invention. However, it should be understood that this description is not to be used to limit the present invention, but rather, is provided for the purpose of illustrating the general features of the invention.

The invention relates to composition and manufacture of polyvinyl chloride ("PVC") replacement films. The films of the present invention do not contain PVC and hence are called non-PVC films. The non-PVC films offer the advantage of being environmentally friendly and having the property of durability, printability and flame retardancy of PVC films. The non-PVC films of the present invention have properties and performance that are comparable to, or exceed, those of the PVC films, and are suitable for applications where PVC films are generally used, including for example, wall covering, signs, graphics, pressure sensitive products and the like.

Figure 1 is a sectional view of an exemplary film prepared in accordance with the present invention. The film is generally depicted by reference to numeral 5 and includes a release liner 10, such as a silicone coated material, a pressure sensitive adhesive layer 20, a substrate layer 30, and a print layer 40.

The adhesive layer 20 generally can be classified into the following categories: random copolymer adhesives such as those based upon acrylate and/or methacrylate copolymers, α-olefin copolymers, silicone copolymers, and the like; and block copolymer adhesives including those based upon linear block copolymers (i.e., A-B and A-B-A type), branched block copolymers, star block copolymers, grafted or radial block copolymers, and the like, and natural and synthetic rubber adhesives.

A description of useful pressure-sensitive adhesives can be found in Encyclopedia of Polymer Science and Engineering, Vol. 13. Wiley-Interscience Publishers (New York, 1988). Additional descriptions of useful pressure-sensitive adhesives can be found in Encyclopedia of Polymer Science and Technology, Vol. 1, Interscience Publishers (New York, 1964).

The liner 10 is preferably an ultrathin or ultra light liner having a thickness of less than 1.02 mil (0.0255 mm), less than 1 mil (0.0254 mm), less than 0.8 mil (0.0203 mm), less than 0.6 mil (0.015 mm), less than 0.50 mil (0.013 mm), or equal to or less than 0.25 mil (0.00626 mm). Such thin liners are commercially available as HOSTAPHAN® polyester film (e.g., 0.5 mil, 0.0127 mm, Tradename 2SLK silicone coated film) sheeting from Mitsubishi Chemical Company of Tokyo Japan. Another liner material is provided by Avery Dennison Corporation of Pasadena, California as a 1.02 mil (0.026 mm) polyester backing sheet with a 1.25 mil (0.032 mm) adhesive layer.

The substrate layer 30 can include any polymeric film that is PVC-free. Such films include, for example, without limitations, polyolefins, PET, polycarbonates, polystyrene or its copolymers and biodegradable polymers such as polylactic acid. The polyolefin film is preferred to be polypropylene or its copolymer or a mixture of. When coating process is desired to make the substrate layer, the substrate layer can be made from a coatable composition such as blend of cross linkable vinyl acetate copolymer, VAE emulsions, a polyurethane containing emulsions or any other non-PVC polymer films.

The print layer 40 can include in exemplary embodiments nonhalogen fire retardants mixed with a vinyl acetate containing polymer, a blend of vinyl acetate with VAE, a VAE/acrylic hybrid, an all acrylic formulation, a styrene copolymer or a VAE emulsion.

The exemplary embodiments of composition and film 5 of the present invention include at least one of the following:
(1) Vinyl acetate ethylene ("VAE"),
(2) VAE-acrylic hybrid
(3) Vinyl acetate homopolymer,
(4) Blend of VAE and vinyl acetate homopolymer,
(5) Blend of VAE and vinyl acetate copolymer,
(6) Blend of VAE with polyurethane,
(7) Blend of VAE with acrylic copolymer,
(8) Cross linking of VAE by adding small content of silane,
(9) Acrylic copolymer
(10) Polyurethane containing polymer, and/or
(11) Blend of Polyurethane and acrylic
(12) Styrene copolymer
(13) Polylactic acid

In other embodiments, a pigment, e.g., Titanium dioxide ("TiO₂") and/or other pigments, can be added to any of the above thirteen embodiments of composition and film of the present invention. The opacity of the film 5 depends on the amount of TiO₂ or other materials. In another embodiment, the pigment, e.g., TiO₂, can be replaced with latex such as ROPAQUE™ OP-96 or ULTRA-OPAQUE, made by Rohm and Haas of Philadelphia, Pennsylvania. In another embodiment, pigment like TiO₂ may not be included if a clear film is desired. In a further embodiment, CYMEL® 385 by Cytec Industries Inc. of West Paterson, New Jersey can be used as a cross-linker to increase the tensile strength of the film. In another embodiment used for nonprinting applications, wax emulsion, e.g., MICHEM® GUARD 55 from Michelman of Cincinnati, Ohio, can be added to any of the above ten embodiments of composition and film, thereby providing the property of ease-of-cleaning to the film. In yet another embodiment, wax emulsion, e.g., MICHEM® EMULSION 47950 from Michelman can be added to any of the above thirteen embodiments of composition and film of the present invention, and the manufactured film can be useful for anti-graffiti applications. In yet another embodiment, silica particles can be added to any of the above formulations to create an inkjet printable film for water based ink. Water based ink provides better environmental protection than solvent based inks. In another embodiment, the polystyrene copolymer is styrene-butadiene copolymer.

In other embodiments, the carboxyl containing components of the print layer are crosslinkable using polyaziridine, for example, XAMA®-7 from Lubrizol. The hydroxy containing components are crosslinkable using polyaziridine or melamine formaldehyde, e.g. CYMEL® 385 from Cytec Industries Inc. Other crosslinkers known to the skilled in the art can also be used to cross link the print layer components.

Another important component for film 5 is nonhalogen flame retardants. In some applications such as wall-covering, flame retardancy is an important property and a product must meet the flame retardancy requirement. There are many commercially available flame retardants that can be used to provide the flame retardancy of a product. However, most of the commercial flame retardants are halogen based. Adding a halogen based flame retardants would negatively impact the environmental friendliness of the non-PVC film. For some of the non-halogen based flame retardants, its lack of compatibility with the base film formulation and its negative impact on the film mechanical properties and adhesion to other layers of the construction can make the formulation and process difficult.

To meet the flame retardancy requirement of the non-PVC film, a non-halogen based flame retardant or a mixture of non-halogen flame retardants can be added to any of the thirteen formulations. The nonhalogen fire retardant is preferred to be a combination of carbonifics, acid catalyst and blowing agent in fine powder form. Such non-halogen flame retardants includes penta erythrital, ammonium polyphosphate, urea and melamine based chemicals. JLS-Pent, JLS-APP101 and JLS-Melamine from JLS Chemical, California are examples of such flame retardants. The flame retardants need to be processed first into fine particles before being mixed with the non-PVC film formulation. The particle size is preferred to be less than 12 micron meters. It is more preferred to be less than 6 micron meters. The flame retardants can be 30 to 60% of the total formulation of the print layer. In one embodiment of the invention, nonhalogen flame retardants were added to the print layer only. In another embodiment of the invention, nonhalogen flame retardants were added to both the print layer and the substrate.

The film 5 of the present invention can be formed by preparing a liquid formulation or emulsion of an embodiment of composition of the present invention and then coating, such as by curtain coating, a substrate with the formulation or emulsion. In one embodiment, the substrate is a liner. After drying of the film, the film can be peeled off the liner as a stand alone film which gets laminated with a substrate later on. In another embodiment, the substrate is a polyethylene terephthalate ("PET") film. In yet another embodiment, the substrate is a polyolefin film. To improve adhesion between the print layer and the substrate, the substrate can be corona treated. A primer layer can also be coated on the substrate to improve adhesion. Such primer layer can be any coating that can improve adhesion of the print layer to the substrate. One example is the MICA A-131-X, a 5% polyethylenimine (PEI) solution from Mica Corporation, Shelton, CT.

An exemplary method of making a film according to the present invention is illustrated in the flowchart 50 of Figure 2. After starting at step 60, the next step 70 is to provide components and a substrate. Next, at step 80, the components are blended to form a composition. The composition includes a vinyl acetate containing polymer and the flame retardant additives. Next, at step 90, the substrate is coated with the composition. At step 100, the composition is dried, and then, at step 110, the dried composition is removed from the substrate. The method ends at step 120.

Adhesives can be applied to one or both major surfaces of the film 5 using known processes, such as, for example, adhesive lamination. Halogen free adhesives can be used to produce halogen-free films. Examples of halogen-free adhesives include acrylic adhesives such as a hot-melt acrylic adhesive and a water-based latex acrylic adhesive. Other halogen-free adhesives include a hot-melt rubber adhesive, a silicone adhesive, thermoplastic elastomers, other halogen-free adhesives known in the art, and any combination of any of these in any proportion.

In an exemplary embodiment of the composition of present invention, the polymeric material includes vinyl acetate containing polymer with a vinyl acetate content of at least about 75%, flame retardant additives, a pigment, and a dispersant. In yet another exemplary embodiment of the composition, the polymeric material includes a vinyl acetate containing polymer with a vinyl acetate content of at least 75%, flame retardant additives, a pigment, a dispersant, a wetting agent, and an ultraviolet light ("UV") stabilizer.

### Test Methods

The properties of the composition and film 5 of the present invention can be characterized by various analytical techniques. A brief description of these analytical techniques is given below:

### Printability

The printability is tested by printing directly on the film specimen using solvent based or water based ink-jet printer as well as water based gravure printer. Visual inspection is performed to determine if there was smudging of ink on the surface of the film and diffusion of ink inside the film. Good printing is obtained if there is no smudging and diffusion of ink.

### Flame Retardant Test

A vertical feasibility test was used. The coated film was cut into 2' x 4' strip and made as a loop by connection both ends. The flame from a match was set under the loop. It was considered pass the test if the film was resistant to the flame for a few seconds. Normally PP film will be ignited as soon as the flame was put under the looped film.

### Examples

The following Table 1 provides a list of chemicals used in the following examples, identifying their supplier; function; chemical name, formula or type; percentage solids; and Tg.

**Table 1. Materials Used in Examples**

| **Material Description** | **Supplier** | **Function** | **Chemical** | **% Solids** | **T_{g} °C** |
|---|---|---|---|---|---|
| Kronos® 4311 | Kronos | Pigment | TiO₂ | 77 | |
| Drewplus® Y-250 | Ashland | Defoamer | Aliphatic Petroleum | 70 | |
| Tamol™ 731A | Rohm Haas | Dispersant | hydrophobic copolymer | 25 | |
| Superwet 22S | Shepard Bros. | Wetting agent | Polyether modified polysiloxane | 100 | |
| Vinnapas® 460 | Wacker | Binder | VAE Emulsion | 60 | 0 |
| Vinnapas® 465 | Wacker | Binder | VAE Emulsion | 65 | |
| JLS-Melamine | JLS Chemical | Flame Retardant | Melamine | 100 | |
| JLS-Penta | JLS Chemical | Flame Retardant | Pentaerythritol | 100 | |
| JLS-APP101 | JLS Chemical | Flame Retardant | Melamine modified polyphosphate | 100 | |
| JLS-PNP1C | JLS Chemical | Flame Retardant | Ammonium polyphosphate | 100 | |
| Joncryl® 80 | BASF | Binder | Acrylic Latex | 45.5 | - 30 |
| Xama®-7 | Lubrizol | Crosslinker | Polyaziridine | 95 | |
| Gasil 23F | Ineos silicas | Absorb water | Silica | 100 | |
| MICA A-131-X | Mica Corp. | Primer | Polyethylenimine | 5 | |
| DS6D81 | Dow Chemical | Substrate | PP-co-PE | 100 | |
| P8555SD | A. Schulman | Substrate | TiO2 filled PP | 100 | |
| NA217-000 | Equistar | Substrate | LDPE | 100 | |

The chemicals used in the examples are further described below.
Vinnapas® 460: A low viscosity/high solids (60%), polyvinyl alcohol protected Vinyl Acetate-ethylene (VAE) emulsion, available from Wacker of Allentown, PA.
Vinnapas® 465: A low viscosity/high solids (65%), polyvinyl alcohol protected Vinyl Acetate-ethylene (VAE) emulsion, available from Wacker of Allentown, PA.
Tamol™ 731A: A hydrophobic copolymer dispersant; excellent compatibility and good pigment wetting, available from Rohm Haas, Philadelphia, PA.
Superwet 22S: A general purpose nonionic defoamer; ideal wetting & leveling agent for aqueous application 100% solids, available from Shepard Bros.
Kronos® 4311: An aqueous dispersion of titanium dioxide at 77% solids, available from Kronos, Houston, TX.
Rheolate® 350: Associate thickener, available from Elementis, Cincinnati, OH.
Joncryl® 80: Acrylic latex at 48% solids, -30°C T_{g}, available from BASF, Racine, WI.
Drewplus® Y-250: An aliphatic petroleum defoamer, available from Ashland, Columbus, OH.
Disponil® AFX 4030: Nonionic surfactant, available from Cognis, Cincinnati, OH.
JLS APP-101: Melamine modified ammonium phosphate, available from JLS Chemical, Pomona, CA
JLS-melamine: Melamine, available from JLS Chemical, Pomona, CA
JLS-penta: Pentaerythritol, available from JLS Chemical, Pomona, CA
JLS-PNP1C: ammonium polyphosphate, available from JLS chemical
Xama® 7: Polyaziridine, available from Lubrizol, Brecksville, OH.
Gasil 23F: silicas, available from Ineos Silicas Americas, Joliet, IL
MICA A-131 -X: 5% polyethylenimine solution from Mica Corporation, Shelton, CT.
7.5 mil PP: Polyolefin film, available from Profol Inc. Cedar Rapids, IA.
DS6D81: ethylene propylene copolymer, available from Dow Chemical,
P8555SD: TiO2-polypropylene masterbatch, available from A. Schulman,
NA217-000: low density polyethylene, available from Equistar

### Example 1 Flame retardant additives (not according to the invention)

In a container, the following mixtures were prepared:
(A) 48 parts of water
(B) 5 parts of JLS-Melamine
(C) 7 parts of JLS-Penta
(D) 10 parts of JLS-APP 101
(E) 0.6 parts of Rheolate® 350 and 0.6 parts of water
(F) 0.17 parts of Drewplus® Y-250

The mixture was ball milled until the particle size is higher than 7 in Hegman (i.e., less than 12 micron), prefer higher than 7.5 in Hegman (< 6 micron).

### Example 2 Non-PVC film with flame retardants

71.37 parts of the flame retardant additives from example 1 was then charged to ajar and post-added the following under agitation:
(A) 24.5 parts of Vinnapas® 460,
(B) 2 parts of Disponil® AFX 4030
(C) 0.2 parts of Superwet 22S
(D) 0.4 parts of Tamol™ 731A
(E) 5 parts of Kronos® 4311

The resulting mixture has 41.2% solids. A non-PVC film was made by coating the mixture on the 7.5mil PP film from Profol Inc. The coating procedure is as following:
(1) corona treat the PP film to 47 dyne/cm
(2) coat the PP film with Polyethylenimine (PEI) primer solution at about 0.2 gsm using Meyer Rod #1.5.
(3) coat the primed PP with the mixture made above
(4) dry at 75°C over 5 minutes.

The resulting dried topcoating is 2.5 mil. It shows good adhesion to the primed PP, good water based gravure printing, embossing, and flame retardant using the vertical feasibility test. This film can also be digitally printed by Mimaki solvent ink jet printer (GP-604S).

### Example 3 (not according to the invention)

Same as Example 2 except Joncryl 80 was used in A instead of Vinnapas 460 and Xama-7 was used in D instead of Tamol™ 731A. The resulting formulation shows good adhesion to the corona treated PP without PEI primer after drying in the 75°C over 5 minutes. This coated film also shows good embossing, gravure printing, and flame retardant properties.

### Example 4

Same as Example 2 except Gasil 23F was used instead of Tamol 731A in D and 56.6 parts (39% solids) of Example 1 was used instead of 71.37 parts (31.4% solids). The formulation was coated over a corona treated and PEI primed PP film. The resulting coated film shows that it is desktop ink jet printable. The color density is Cyan 1.15, magenta 1.01, yellow 1.03 and black 1.11 measured by Gretag Bacbeth SpectroEye.

### Example 5

Same as Example 2 except E was not used. The topcoat layer also has good adhesion to the primed PP.

### Example 6

Same as Example 2 except 24 parts of Vinnapas 465 was used instead of 24.5 parts of Vinnapas 460.

**Table 2. Composition of formulations used in Examples**

| Example | **1** | **2** | **3** | **4** | **5** | **6** |
|---|---|---|---|---|---|---|
| JLS-Melamine | 5 | 5 | 5 | 5 | 5 | 5 |
| JLS-Penta | 7 | 7 | 7 | 7 | 7 | 7 |
| JLS-APP101 | 10 | 10 | 10 | 10 | 10 | 10 |
| Kronos 4311 | | 3.9 | 3.9 | | | 3.9 |
| Vinnapas 460 | | 15.4 | | 15.4 | 15.4 | |
| Airflex 465 | | | | | | 15.4 |
| Joncryl 80 | | | 15.4 | | | |
| Gasil 23F | | | | 12 | | |

### Examples 7-9 Polyolefin base film (not according to the invention)

DS6D81 ethylene propylene copolymer from Dow Chemical, P8555SD TiO2 polypropylene masterbatch from A. Schulman, and NA217-000 low density polyethylene from Equistar have been used to create a base film for example 7-9. JLS-PNP1C, an ammonium polyphosphate based flame retardant from JLS chemical was incorporated into the film for flame retardancy.

**Table 3 lists the formulation for example 7 to 9**

| ID | Polyolefin base material | Fire retardant | Polyolefin/ Fire retardant weight Ratio | Film Thickness |
|---|---|---|---|---|
| Example 7 | DS6D81 / P8555SD (100/3) | PNP1C | 80:20 | 9.3 mil |
| Example 8 | DS6D81 / P8555SD (100/3) | PNP1C | 70:30 | 10 mil |
| Example 9 | NA 217-000 | PNP1C | 60:40 | 8.0 mil |

The films were formed using the following procedures:

### Instrument:

1. Twin screw extruder manufactured by Leistritz (model MICRO 27) and
2. Vibratory LWF style feeders made by K-Tron

### Specifications:

1. 27 mm co-rotating screw, 500 rpm, and 40 L/D.
2. 9 heating zones
3. a side feeding zone located at zone 5.

Polyolefin and white masterbatch pallets were pre-mixed at desired ratio. The mixture was fed by a K-Tron feeder to the feeding zone. All compounding work was done at 180°C to 200°C, the melting temperature.

Polymer melt from the twin screw extruder was directly fed into a 6" die and cast onto a 3-roll stacks with cooling. The finished sheets were used for subsequent testing.

### Example 10

Example 6 solution was coated over primed sample of Example 8 at 2.5 mil. It also shows good printing, embossing and flame retardant properties.

## Claims

1. A film comprising
a release liner,
a pressure sensitive adhesive layer,
a substrate layer, and
a print layer,
wherein the print layer includes
a. an emulsion polymer being a blend of a vinyl acetate homopolymer and a vinyl acetate ethylene copolymer mixed with
b. at least one nonhalogen fire retardant.

2. The film of claim 1, wherein the nonhalogen fire retardant is a combination of carbonifics, acid catalyst and blowing agent.

3. The film of claim 1 or 2, wherein the nonhalogen fire retardant is in the form of a fine particulate, preferably less than about 12 microns.

4. The film of claim 1, further comprising one or more additives selected from the group consisting of a pigment, a surfactant, a dispersant, a wetting agent, a defoamer, a coupling agent, a solvent, a UV absorber, and a light stabilizer.

5. The film of claim 4, wherein the additive is silica.

## Patentansprüche

1. Folie, umfassend
eine Trennschicht,
eine Haftkleberschicht,
eine Substratschicht und
eine Druckschicht,
wobei die Druckschicht einschließt
a. ein Emulsionspolymer, welches ein Blend eines Vinylacetathomopolymers und eines Vinylacetat-Ethylen-Copolymers gemischt mit
b. mindestens einem Nicht-Halogen-feuerhemmenden Mittel ist.

2. Folie gemäß Anspruch 1, wobei das Nicht-Halogen-feuerhemmende Mittel eine Kombination von Carbonifics, Säurekatalysator und Blähmittel ist.

3. Folie gemäß Anspruch 1 oder 2, wobei das Nicht-Halogen-feuerhemmende Mittel in der Form eines feinen teilchenförmigen Körpers, vorzugsweise weniger als etwa 12 Mikrometern, ist.

4. Folie gemäß Anspruch 1, weiter umfassend ein oder mehrere Additive, ausgewählt aus der Gruppe, bestehend aus einem Pigment, einem grenzflächenaktiven Mittel, einem Dispergiermittel, einem Benetzungsmittel, einem Entschäumungsmittel, einem Kupplungsmittel, einem Lösungsmittel, einem UV-Absorptionsmittel und einem Lichtstabilisator.

5. Folie gemäß Anspruch 4, wobei das Additiv Silica ist.

## Revendications

1. Film comprenant
une doublure antiadhésive,
une couche adhésive sensible à la pression,
une couche de substrat, et
une couche d'impression,
dans laquelle la couche d'impression comprend
a. un polymère en émulsion qui est un mélange d'un homopolymère d'acétate de vinyle et un copolymère d'éthylène-acétate de vinyle mélangé avec :
b. au moins un retardant au feu non halogène.

2. Film selon la revendication 1, dans lequel le retardant au feu non halogène est une combinaison d'agents de carbonisation, d'un catalyseur acide et d'un agent d'expansion.

3. Film selon la revendication 1 ou 2, dans lequel le retardant au feu est sous la forme de fines particules, de préférence de moins de 12 microns environ.

4. Film selon la revendication 1, comprenant en outre un ou plusieurs additifs sélectionnés parmi le groupe consistant en un pigment, un tensioactif, un dispersant, un agent de mouillage, un agent anti-mousse, un agent de couplage, un solvant, un absorbeur d'UV, et un stabilisant contre l'effet de la lumière.

5. Film selon la revendication 4, dans lequel l'additif est de la silice.
